# EUROPEAN PATENT APPLICATION

(11) **EP 4 818 973 A1**
(43) Date of publication of application: **07.10.2026**
(21) Application number: 25167245.7
(22) Date of filing: 31.03.2025
(51) Int. Cl.: G06N 3/0455, G06N 7/01

(54) **METHOD AND DEVICE FOR DATA COMPARISON**

(71) Applicant: Robert Bosch GmbH, 70442 Stuttgart (DE)
(72) Inventor: Tarsi, Tim Lucca, 74385 Pleidelsheim (DE); Beluch, William Harris, 70197 Stuttgart (DE); Zhang, Dan, 71229 Leonberg (DE)

(57) **Abstract**

The invention provides a computer-implemented method of comparing a set of data elements, wherein the set of data elements is subdivided to a plurality of datasets, wherein a data element comprised by a dataset is a sample from an unknown distribution, wherein the datasets are transformed to a joint feature space using a mapping, wherein the datasets in the feature space are modeled by probabilistic models approximating the unknown distributions in order to derive approximated distributions, wherein a comparison of the datasets is performed in a probability space, in particular by comparing the approximated distributions regarding similarity. Additionally, the invention encompasses a computer program, Machine-readable storage medium and a system.

## Description

The invention provides a computer implemented method of comparing a set of data elements. This method incorporates the usage of probabilistic models. Additionally, the method comprises a method for obtaining training data for training a machine learning system as well as the usage of the trained machine learning system. The invention also encompasses a computer program, a machine-readable storage medium, and a system for implementing the method.

### Prior art

Evaluating the similarity between two datasets is essential in numerous applications, particularly for training and evaluating data-driven models, such as machine learning models. It is critical to ensure that training and evaluation datasets adequately represent the same underlying distribution to accurately assess model performance. However, this comparison becomes challenging with high-dimensional data, such as images, text, or video, where direct analysis is often computationally infeasible.

Domino (Eyuboglu et al. "Domino: Discovering Systematic Errors with Cross-Modal Embeddings." arXiv:2203.14960, 2022) aims to identify systematic errors by retrieving coherent subsets of underperforming data with respect to a trained classification model. This approach is specifically tailored to identifying systematic errors related to model performance and may not be suitable for general-purpose dataset comparison or identifying subtle, localized distributional differences.

Kübler et al. (Kübler, J., et al. " AutoML Two-Sample Test" arXiv:2206.08843, 2022) propose a two-sample test based on mean discrepancy using a learned witness function as the test statistic. However, this method relies on global mean discrepancy and may not effectively capture localized differences in data density between the datasets.

These existing methods, while useful in certain contexts, exhibit limitations in their ability to efficiently and accurately pinpoint localized discrepancies within high-dimensional datasets.

### Disclosure of the invention

The invention provides a computer-implemented method of comparing a set of data elements, wherein the set of data elements is subdivided to a plurality of datasets, wherein a data element comprised by a dataset is a sample from an unknown distribution, wherein the datasets are transformed to a joint feature space using a mapping, wherein the datasets in the feature space are modeled by probabilistic models approximating the unknown distributions in order to derive approximated distributions, wherein a comparison of the datasets is performed in a probability space, in particular by comparing the approximated distributions regarding similarity.

A data element can be understood as a unit of information. It is for example a specific observation, measurement, or feature. Data elements can take various forms, for example binary values, numerical values, categorical labels, text strings, sensor signals, or other data types. A data element may in particular comprise further data elements for example a data element may represent a whole image comprising pixel information from a plurality of pixels, wherein the pixel information of each pixel is represented by a data element. A set of data elements comprises a plurality of data elements, wherein the data elements might be of the same type or of different types. A set of data elements may in particular be a subset of another set of data elements. Data elements comprised by a set of data elements can in particular be subdivided to a plurality of subsets to obtain datasets. In the context of this invention, data elements comprised by a dataset can in particular be treated as a samples drawn from an unknown distribution. Subdividing the set of data elements to a plurality of datasets can for example be done by random sampling, temporal splitting, depending on a type of data elements and/ or on meta data information associated to data elements.

The datasets are in particular transformed to a joint feature space by a mapping. The joint feature space can in particular be a common representational space where data elements from different datasets are transformed to enable comparison. The mapping can be any suitable transformation that projects the data elements from their original space into a common feature representation. Examples of suitable mappings include linear transformations, kernel functions, or neural networks.

To model the unknown distribution, the datasets in the feature space can in particular be modeled by probabilistic models approximating the unknown distributions in order to derive approximated distributions. The probabilistic models in particular provide a way to characterize a density of the data elements in the feature space without requiring explicit knowledge of the unknown distribution. Examples of suitable probabilistic models include Gaussian Mixture Models (GMMs), Kernel Density Estimation (KDE), or Hidden Markov Models (HMMs). An output of this modeling step is in particular a set of approximated distributions described by the probabilistic model.

The approximated distributions may in particular be used to perform a comparison of the datasets in a probabilistic space. This comparison utilizes for example metrics, measures and/ or methods that operate on probability distributions, such as the Bhattacharyya distance, Kullback-Leibler (KL) divergence, or Jensen-Shannon divergence, to quantify in particular a degree of resemblance between the datasets.

In the context of this invention, similarity refers for example to the degree of resemblance or correspondence between the approximated distributions of datasets within the joint feature space. It quantifies how closely the probabilistic representations of the datasets match each other.

In an advantageous embodiment, a data element comprises a sensor signal, wherein the sensor signal is in particular from a physical and/ or from a synthetic sensor.

A sensor signal can in particular comprise a single measurement from a sensor but also a series of measurements and/ or pairs of measurements for example a measured value and a time stamp. Especially smart sensor may in particular provide multidimensional signals. A smart sensors is for example a sensor that may perform preprocessing steps on the measured data and/ or derive further information that is provided within the sensor signal.

A sensor signal can in particular originate from a physical sensor, which directly measures a physical quantity. Examples of physical sensors include cameras, microphones, temperature sensors, pressure sensors, accelerometers, and/ or other devices that capture real-world phenomena. Alternatively, or in addition, the sensor signal can be derived from a synthetic sensor. A synthetic sensor refers in particular to a computational process and/ or model that generates data resembling a sensor signal but without direct physical measurement. Examples of synthetic sensors include simulations, generative models, and data augmentation techniques.

Usage of the comparison on sensor signals is specifically advantageous as sensor signals are in particular often of higher complexity and therefore difficult to compare as the higher complexity may in particular obscure differences between a true signal and other effects, on the other hand sensor signals are crucial for environmental perception for example for environmental perception in robots. This higher complexity stems for example from high data volumes and rates, a presence of noise and/ or measurement errors, signal variability and/ or dynamic behavior under different conditions, and/ or complex correlations and/ or dependencies within the sensor signals.

In another embodiment, the unknown distributions are probabilistic distributions.

A probabilistic distribution, also known as a probability distribution, is in particular a mathematical function that describes the likelihood of different outcomes or values for a random variable.

In a preferred embodiment, the set of data elements comprises data elements from different domains, wherein for the mapping to the joint feature space an encoder is utilized, wherein the encoder is in particular a neuronal network.

A domain refers in particular to a specific area or category of data, for example characterized by its inherent properties and/ or representation, including for example data type and structure, dimensionality, distribution and/or statistical properties, noise, domain-specific semantics. For example, data from different sensor types (e.g. image sensor, radar sensor, lidar sensor), data from different sensor models (e.g. different imager models) and/ or different sensor configurations (e.g. different resolutions, signal rates) represent distinct domains. To facilitate comparison, the data elements from these different domains can in particular be mapped into a joint feature space using an encoder. The encoder in particular transforms the domain-specific representations into a common feature representation within the joint feature space. This enables in particular comparison of data elements across domains, which is in particular relevant for multi sensor perception, wherein environmental perception is done by fusing information from multiple sensors measuring data from different domains. In an advantageous implementation, the encoder can be a neural network. Neural networks, with their ability to learn complex non-linear mappings, are well-suited for transforming data from diverse domains into a shared feature space. An example for an encoder for image data is Alpha Clip.

In a preferred embodiment, the probabilistic models are mixture models, in particular Gaussian Mixture Models, wherein a mixture model is in particular defined as a weighted sum of component distributions, wherein the component distributions are in particular local approximations of an unknown distribution.

Therefore, mixture models are in particular well-suited for local analysis because the component distributions can capture local variations in the data density within the feature space.

A specific type of mixture model is the Gaussian Mixture Model (GMM). In a GMM, the component distributions are Gaussian distributions, each in particular characterized by its mean and covariance. GMMs are particularly advantageous due to well-established properties and computational tractability of Gaussian distributions. A number of used component distributions is derived depending on the application and the properties of the unknown distribution and can be optimized in iterations.

A parameter estimation for GMMs may for example be performed using the Expectation-Maximization algorithm.

In an advantageous embodiment, matrices of the GMM can in particular be modeled with sparse matrices, in particular diagonal matrices. Diagonal matrices in particular reduce the computational complexity.

In an advantageous embodiment, at least a first probabilistic model is aligned to at least a second probabilistic model, wherein a probabilistic membership of data elements comprised by a dataset for the first probabilistic model to the component distributions of the second probabilistic model is determined, wherein distances based on the probabilistic membership are aggregated to a distance tensor, wherein the first probabilistic model is modeled as a multimodal model that models a distribution for the distance tensor as well as for data elements in the joint feature space comprised by the dataset for the first probabilistic model.

Modeling the mixture models is in particular influenced by initialization parameters and/ or data representation. To mitigate in particular an influence of a random initialization and/ or differing data representations, a model may advantageously be aligned to at least one other model by utilizing a probabilistic membership of data elements of one model to each component distribution of at least one other model. Such an alignment establishes a common frame of reference for the mixture models.

Probabilistic membership, in this context, quantifies in particular a likelihood of a data element belonging to each component distribution of at least one other model. The probabilistic membership represents how the data elements from one dataset are distributed relative to at least one other model, in other words the probabilistic membership represents distances between data elements from one dataset to the component distributions of at least one other model.

For deriving an aligned model probabilistic memberships of each data element are aggregated to a distance tensor and a multimodal model is modeled that jointly models a distribution of data elements in the joint feature space from a dataset of the aligned model and a distribution of the distance tensor.

In a further embodiment, the comparison is done with probabilistic measures, in particular Bhattacharyya distance and/ or inclusion, wherein based on the probabilistic measures a ranking of a correspondence of the component distributions of one probabilistic model to at least a second probabilistic model is determined.

Probabilistic measures in particular quantify relationships between probability distributions for example similarity, dissimilarity, divergence and/ or distance.

The Bhattacharyya distance measures the similarity between two probability distributions. A lower Bhattacharyya distance indicates greater similarity. The Bhattacharyya distance is well known to a person skilled in the art.

Inclusion refers to a measure of an expected area of overlap between a component distribution *Q̃ᵢ* in a approximated distribution *P̃* under *Q̃ᵢ* .

The inclusion is defined as 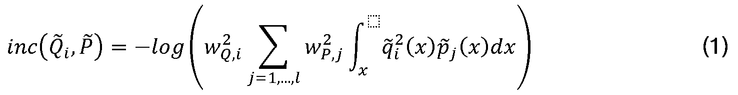 with 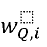 and 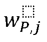 corresponding mixture coefficients and *q̃ᵢ* and *p̃ⱼ* as densities of the component distributions *Q̃ᵢ and P̃ⱼ* for a sample *x.* A higher inclusion value suggests that one distribution is largely encompassed by another.

A choice of specific probabilistic measures depends for example on the characteristics of the data and the goals of the comparison, other suitable measures are for example KL-Divergence, Jensen-Shannon Divergence, Cross Entropy, Total Variation.

Based on resulting values, in particular scalar values, a ranking of the component distributions of one model with respect to another model may be derived. The ranking enables for example a selection of best represented or least represented regions in the datasets.

In a preferred embodiment, the comparison is used for anomaly detection between at least two datasets and/ or to detect requested clusters of features in a dataset compared to a second dataset, wherein on occurrence of an anomaly and/ or a requested cluster a signal is output.

Anomaly detection aims in particular at identifying deviations from a defined baseline. Advantageously, the comparison can be applied to at least two datasets that are already separated and/ or to at least two datasets that are subsets of another dataset. Alternatively or additionally the comparison can also be applied to a data stream that is batched to a plurality of datasets, wherein for example a current batch is compared to a previous batch and or a batch is compared to an average of a plurality of previous batches.

A detection of requested clusters of features in a dataset compared to a second dataset aims in particular at comparing at least one data set to at least a second dataset, wherein the at least second dataset acts as a baseline. Advantageously, the comparison can be applied to at least two datasets that are already separated and/ or to at least two datasets that are subsets of another dataset. Alternatively or additionally the comparison can also be applied to a data stream that is batched to a plurality of datasets, wherein the batches are compared to at least one dataset that is defined as the baseline. Requested clusters can in particular be novel clusters of features in a dataset and/ or matching clusters of features in a dataset compared to the baseline.

On occurrence of an anomaly and/ or a requested cluster a signal is output. The signal can in particular be an internal signal in a program for example setting a variable or a flag, an electronic signal from one computation unit that is executing the comparison to another computation unit and/ or a radio signal transmitted to an external receiver.

Using an embodiment of the here described invention for anomaly detection and/ or for detecting requested clusters of features may in particular be advantageous as large amounts of higher dimensional data can be analyzed and manual definition of rules for anomaly detection and/ or for detecting requested clusters of features is avoided.

In a further embodiment, on occurrence of the signal at least one dataset is transmitted to an external system, wherein the dataset is in particular used for training and/ or testing a machine learning system.

A transmission of a dataset may in particular occur via various communication protocols, such as network transfer or direct data connection. The transmitted data may include the dataset itself, along with associated metadata such as for example timestamps, annotations, tags, or other relevant information.

An external system can be, for example, a cloud-based storage and processing platform, a dedicated data storage unit, or another computing system in particular configured for data analysis and/ or machine learning tasks.

A transmitted dataset can in particular be used for training or testing a machine learning system, in particular a machine learning system for environmental perception such as image classification and/ or object detection. For example, an anomalous dataset could be used to re-train a machine learning system to improve its anomaly detection capabilities. Similarly, a dataset identified as containing a requested cluster could be used as a validation set to assess the performance of a machine learning system on specific data characteristics and/ or to re-train a machine learning system. This feedback loop enables in particular continuous improvement and adaptation of the machine learning system based on the insights gained from the comparison method.

In a preferred embodiment, the invention comprises a method for determining a dataset for training and/ or testing a machine learning system, wherein at least a first dataset is used as a training dataset for the machine learning system and at least a second dataset is used to validate the machine learning system, wherein the described method is used to verify that the similarity between the first and second dataset is below or above a predefined threshold, wherein depending on the similarity the at least first dataset and/ or the at least second dataset are adapted in particular to increase the similarity, wherein data is in particular shifted between the first and second dataset, new data is acquired and/ or new data is added.

A training of a machine learning system, for example with supervised learning, in particular comprises at least one training dataset and one dataset to validate the machine learning system (also named validation dataset). The method according to the described invention can in particular be used to verify that the training dataset and the validation dataset represent similar data. Therefore, for example a similarity measure is applied to the datasets and a resulting similarity value is compared to a predefined threshold. The predefined threshold is in particular a hyper parameter of the method and may be optimized. Depending on a result of a comparison of the similarity value and the predefined threshold, the training and/ or validation dataset are in particular adapted to increase the similarity. Adapting the training and/ or validation dataset can for example be done by shifting data elements between the training and validation dataset, adding new data elements from other sets of elements to the training and/ or validation dataset and/ or acquiring new data elements. A selection of data elements that are shifted, added or acquired can be done based on similarity analysis according to the method of the described invention.

This embodiment offers a significant advantage in training machine learning systems by actively ensuring that the training and validation datasets represent similar data. This proactive approach, based on quantifying and optimizing dataset similarity, leads to improved model generalization, reduces overfitting, and/ or enhances a reliability and performance of the trained machine learning system.

In an advantageous embodiment, the invention comprises using a machine learning system for controlling a technical system, wherein the machine learning system was trained and/ or tested with at least one dataset that was compared to at least another dataset utilizing the method according to the presented method.

A technical system is for example a system of interacting components that performs technical functions, wherein the machine learning system in particular controls a behavior of the technical system based on sensor signals. The behavior of the technical system can for example be controlled by the machine learning system by sending signals to actuators of the technical system in particular brakes, engines, displays, lights, thermoelements and/ or other actuators.

In a further embodiment, the technical system is a robot, in particular an automated vehicle, wherein based on an output of the machine learning system in particular longitudinal and/ or lateral trajectories of the robot are controlled.

A robot, in this context, refers for example to a programmable machine capable of carrying out complex actions automatically this includes in particular automated vehicles, industrial robotic arms, and other automated systems.

Robots, such as self-driving cars and autonomous mobile robots, utilize machine learning systems to process environment data acquired from sensors, for example image sensors, radar, lidar, ultrasonic sensors, and other data sources. Based on this data processing the machine learning system outputs signals to actuators such as brakes, engines, displays, passive safety devices and/ or lights to control interactions of the robot with its environment. For an automated vehicle, in particular longitudinal and/or lateral trajectories can be controlled. A longitudinal trajectory refers in particular to an automated vehicle's movement along its intended path (acceleration and deceleration), while the lateral trajectory refers in particular to an automated vehicle's positioning within its lane or its maneuvering around obstacles.

A further embodiment comprises a computer program that is configured to cause a computer to execute the method with all of its steps if the computer program is executed by a processor.

A further embodiment comprises machine-readable storage medium on which the computer program is stored.

A further embodiment comprises a system that is configured to carry out the steps of the invented method.

Embodiments of the invention will be discussed with reference to the following figures in more detail. The figures show:
- Fig. 1: a schematic flow chart of an embodiment of the invention;
- Fig. 2: a schematic view of a training process utilizing at least one dataset determined by an embodiment of the invention.

### Description of the embodiments

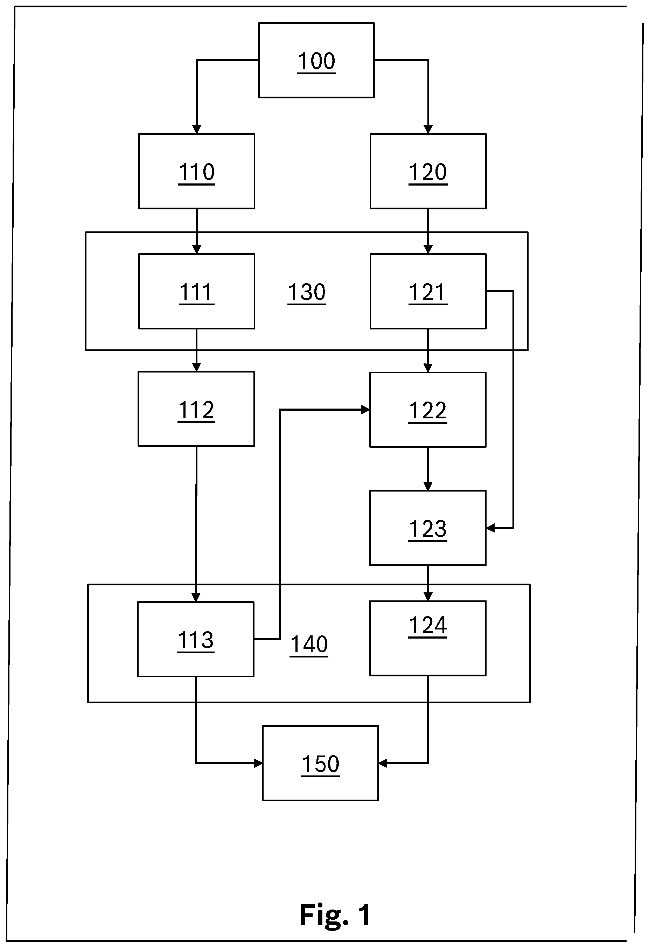

Fig. 1 depicts a schematic flow chart of an embodiment of the invention with a set of data elements (100), wherein the set of data elements (100) comprises data elements from at least one sensor, in particular from at least one image sensor. In a first step, the set of data elements (100) is subdivided to a first dataset *Sₚ* = {*s*_{*P,*1}*,* ..., *s_{P,n}*} (110) and at least a second dataset *S_{Q} =* {*s*_{*Q,*1}*, ... , s_{Q,l}*} (120), wherein data elements *s_{P,i}* ∈ *Sₚ* are samples from an unknown distribution *P* and data elements *s_{Q,j}* ∈ *S_{Q}* are samples from an unknown distribution *Q.* Subdividing the datasets can in particular be done by random sampling, temporal splitting, depending on a type of data elements and/ or depending on meta data information associated to data elements.

In a next step, the datasets *Sₚ =* {*s*_{*P,*1}*, ..., s_{P,n}*} (110) and *S_{Q}* = {*s*_{*Q,*1}, *..., s_{Q,l}*} (120) are transformed to a joint feature space (130) by a mapping *Φ* to obtain datasets *Φ*(*S_{P}*) (111) and *Φ*(*S_{Q}*) (121) in the joint feature space (130), wherein the mapping *Φ* may in particular be a neuronal network. In a next step, *Φ*(*S_{P}*) (111) is modeled by a first probabilistic model (112), in particular a gaussian mixture model (GMM) with an approximated distribution *P̃* (113) approximating *P,* wherein the first probabilistic model comprises *r* = 1,..., *V* component distributions *P̃ᵣ* with densities *p̃ᵣ*(*s*) weighted by mixture coefficients 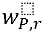 and samples *s,* wherein *V* is optimized depending on an application.

In a next step, a second probabilistic model (123) for *Φ*(*S_{Q}*) (121) is modeled and in particular aligned to the first probabilistic model (112). Therefore, a probabilistic membership *m_{P}*(*s_{Q,j}*) of each sample *s_{Q,j}* to the component distributions *P̃ᵣ* is determined as a log probability of each sample *s_{Q,j}* belonging to the component distributions *P̃ᵣ* as defined by the densities *p̃ᵣ*(*s*) ${m}_{{{P}^{˜}}_{r}} \left({s}_{Q , j}\right) = log \left({{p}^{˜}}_{r}\left({s}_{Q , j}\right)\right) .$ (2)

The probabilistic membership *m_{P̃ᵣ}*(*s_{Q,j}*) for all samples *s_{Q,j}* is aggregated to a distance tensor (122) ${m}_{{P}^{˜}} \left({s}_{Q , j}\right) = \left[{m}_{{{P}^{˜}}_{1}}\left({s}_{Q , j}\right),…,{m}_{{{P}^{˜}}_{V}}\left({s}_{Q , l}\right)\right] ∀ {s}_{Q , j} ∈ {S}_{Q} .$ (3)

In a next step, the second probabilistic model (123) is modeled as a multimodal model, in particular a multimodal GMM, that models a distribution for the distance tensor (122) for all samples *s_{Q,j}* defined as in particular normally distributed $\left.D\right| {S}_{Q}^{\left(c\right)} ∼ N \left({μ}_{D}^{\left(c\right)}, {Σ}_{D}^{\left(c\right)}\right)$ as well as a distribution for features in *Φ*(*S_{Q}*) (121) defined as in particular normally distributed $\left.F\right| {S}_{Q}^{\left(c\right)} ∼ N \left({μ}_{F}^{\left(c\right)}, {Σ}_{F}^{\left(c\right)}\right)$*.* The second probabilistic model (123) is parametrized by $θ = \left[Φ\left({S}_{Q}\right),{μ}_{F}^{\left(c\right)},{Σ}_{F}^{\left(c\right)},{μ}_{D}^{\left(c\right)},{Σ}_{D}^{\left(c\right)}\right]$ (4) for c = 1,...,*K* component distributions, wherein *K* is optimized depending on an application.

A log-likelihood *l*(*θ*) of the second probabilistic model (123) is defined as $l \left(θ\right) = {\sum }_{{s}_{Q , j} ∈ {S}_{Q}} log {\sum }_{c = 1}^{K} P \left({S}_{Q}^{\left(c\right)}=1\right) P {\left(F=\left.{f}_{c}\right|{S}_{Q}^{\left(c\right)}=1\right)}^{γ} P {\left(\left.D={d}_{c}\right|{S}_{Q}^{\left(c\right)}=1\right)}^{1 - γ} ,$ (5) wherein *P* is the probability and *γ* is a hyperparameter to balance an influence of the distance tensor (122) compared to the features. An approximated distribution of the second probabilistic model (123) is defined as *Q̃* (124). Therefore, we obtain approximated distributions in a probability space (140), wherein *P̃* (113) approximating *P* and *Q̃* (124) approximating *Q.*

In a next step *P̃* (113) and *Q̃* (124) may in particular be compared by applying a probabilistic measure (150), for example Bhattacharyya distance, to measure in particular a similarity of a component distribution *Q̃ⱼ* to a approximated distribution *P̃* under *Q̃ⱼ*. Based on an outcome of the probabilistic measure (150) the first dataset *S_{P} =* {*s*_{*P,*1}*, ..., s_{P,n}*} (110) and the at least second dataset *S_{Q} =* {*s*_{*Q,*1}, *..., s_{Q,l}*} (120) are in particular adapted for example by adding new data elements to the set of data elements (100), that have been acquired according to a criterion based on the here described method, wherein the set of data elements (100) is subdivided to a new first and at least a new second dataset, wherein the comparison may in particular be repeated for the new first and at least the new second dataset.

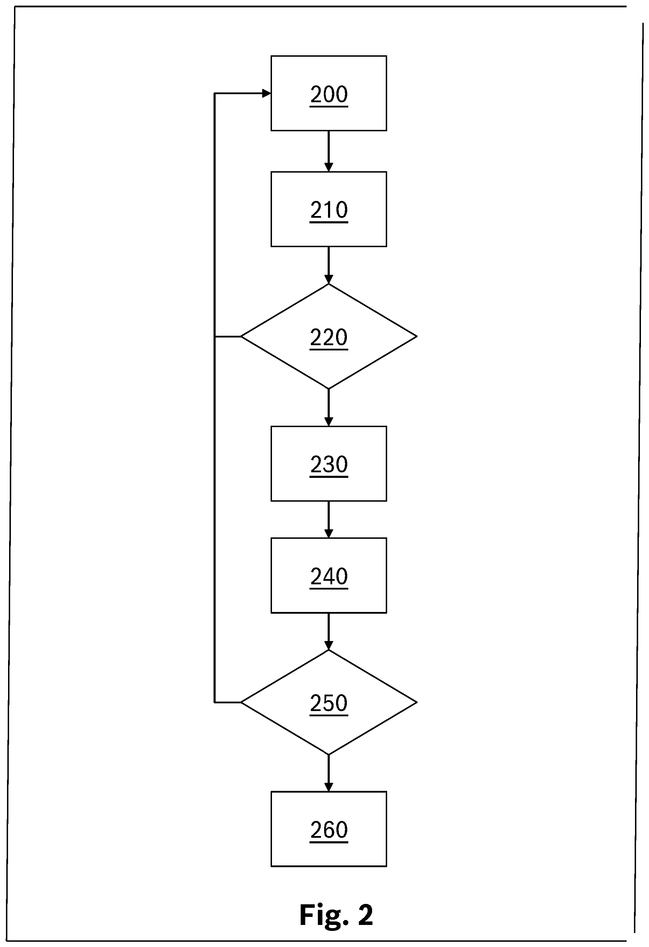

Fig. 2 shows a schematic view of a training process utilizing at least one dataset determined by an embodiment of the invention.

In a first step 200 a set of elements is subdivided to at least two datasets, wherein at least a first dataset (110) is used as a training dataset for the machine learning system and at least a second dataset (120) is used to validate the machine learning system.

In the following step 210, the at least two datasets are compared in particular according to the embodiment described in Fig. 1, in particular by deriving the Bhattacharyya distance.

In the next step 220, depending on a result of the comparison (150) the at least two datasets are adapted for example by adding new data to at least one of the at least datasets. Steps 200, 210, 220 are in particular repeated until the result of the comparison (150) fulfills a defined criterion, in particular when it is below a predefined threshold. The predefined threshold is in particular a hyper parameter and is in particular optimized by methods known to a person skilled in the art. When the result of the comparison (150) fulfills the defined criterion, in step 230 the training dataset is used to train the machine learning system.

After training the machine learning system is done, at least a second dataset used to validate the machine learning system.

In the next step 250, depending on a result of the validation of the machine learning system, the method may in particular start again at step 200, for example if the validation shows improvement potential for the machine learning system.

When there are no more iterations in step 250, the training process terminates in step 260. The machine learning system that was trained according to the described embodiment may in particular be used to control a technical system for example a robot, in particular an automated vehicle.

## Claims

1. A computer implemented method of comparing a set of data elements (100), wherein the set of data elements (100) is subdivided to a plurality of datasets (110, 120), wherein a data element comprised by a dataset (110, 120) is a sample from an unknown distribution, wherein the datasets (110, 120) are transformed to a joint feature space (130) using a mapping, wherein the datasets (110, 120) in the feature space are modeled by probabilistic models (112, 123) approximating the unknown distributions in order to derive approximated distributions (113, 124), wherein a comparison of the datasets is performed in a probability space (140), in particular by comparing the approximated distributions (113, 124) regarding similarity.

2. The method according to claim 1, wherein a data element comprises a sensor signal, wherein the sensor signal is in particular from a physical and/ or from a synthetical sensor.

3. The method according to any of the preceding claims, wherein the unknown distributions are probabilistic distributions.

4. The method according to any of the preceding claims, wherein the set of data elements (100) comprises data elements from different domains, wherein for the mapping to the joint feature space (130) an encoder is utilized, wherein the encoder is in particular a neuronal network.

5. The method according to any of the preceding claims, wherein the probabilistic models (112,123) are mixture models, in particular Gaussian Mixture Models, wherein a mixture model is in particular defined as a weighted sum of component distributions, wherein the component distributions are in particular local approximations of an unknown distribution.

6. The method according to claim 4, wherein at least a first probabilistic model (112) is aligned to at least a second probabilistic model (123), wherein a probabilistic membership of data elements comprised by a dataset for the first probabilistic model (112) to the component distributions of the second probabilistic model (123) is determined, wherein distances based on the probabilistic membership are aggregated to a distance tensor (122), wherein the first probabilistic model (112) is modeled as a multimodal model that models a distribution for the distance tensor (122) as well as for data elements in the joint feature space (130) comprised by the dataset for the first probabilistic model (112).

7. The method according to claim 5 or 6, wherein the comparison is done with probabilistic measures, in particular Bhattacharyya distance and/ or inclusion, wherein based on the probabilistic measures a ranking of a correspondence of the component distributions of one probabilistic model to at least a second probabilistic model is determined.

8. The method according to any of the preceding claims, wherein the comparison is used for anomaly detection between at least two datasets and/ or to detect requested clusters of features in a dataset compared to a second dataset, wherein on occurrence of an anomaly and/ or a requested cluster a signal is output.

9. The method according to claim 8 wherein on occurrence of the signal at least one dataset is transmitted to an external system, wherein the dataset is in particular used for training and/ or testing a machine learning system.

10. Method for determining a dataset for training and/ or testing a machine learning system, wherein at least a first dataset is used as a training dataset for the machine learning system and at least a second dataset is used to validate the machine learning system, wherein the method according to any of the claims 1-8 is used to verify that the similarity between the first and second dataset is below or above a predefined threshold, wherein depending on the similarity the at least first dataset and/ or the at least second dataset are adapted in particular to increase the similarity, wherein data is in particular shifted between the first and second dataset, new data is acquired and/ or new data is added.

11. Using a machine learning system for controlling a technical system, wherein the machine learning system was trained and/ or tested with at least one dataset that was compared to at least another dataset utilizing the method according to any of the preceding claims.

12. The usage according to claim 11, wherein the technical system is a robot, in particular an automated vehicle, wherein based on an output of the machine learning system in particular longitudinal and/ or lateral trajectories of the robot are controlled.

13. A Computer program that is configured to cause a computer to execute the method according to any one of the preceding claims with all of its steps if the computer program is carried out by a processor.

14. A Machine-readable storage medium on which the computer program according to claim 13 is stored.

15. A System that is configured to carry out the method according to any one of claims 1-12
